# EUROPÄISCHE PATENTSCHRIFT

(11) **EP 1 762 504 B1**
(45) Veröffentlichungstag und Bekanntmachung des Hinweises auf die Patenterteilung: **03.09.2008**
(21) Anmeldenummer: 06119890.9
(22) Anmeldetag: 31.08.2006
(51) Int. Cl.: B65D 81/00, A47J 31/06

(54) **Filtereinrichtung**
Filtering device
Dispositif de filtrage

(30) Priorität: 08.09.2005 DE 202005014128 U
(43) Veröffentlichungstag der Anmeldung: 14.03.2007
(73) Patentinhaber: MELITTA HAUSHALTSPRODUKTE GmbH & Co. Kommanditgesellschaft, D-32427 Minden (DE)
(72) Erfinder: Schoevers, Sven, 1091 HT Amsterdam (NL)
(74) Vertreter: Dantz, Jan Henning

(56) Entgegenhaltungen:
- EP-A- 0 361 569
- WO-A-03/101860

## Beschreibung

Die vorliegende Erfindung betrifft eine Filtereinrichtung, insbesondere zum Brühen von Kaffee, nach dem Oberbegriff des Anspruches 1.

Es sind seit einiger Zeit sogenannte Portionspackungen für Kaffee bekannt, die in eine Brühkammer eines Kaffeeautomaten eingelegt werden und dann mit heißem Wasser durchströmt werden. Nach dem Brühvorgang wird dann die Portionspackung komplett entsorgt. Die Portionspackung besteht dabei aus einer im Wesentlichen scheibenförmigen Aufnahme, die mit Kaffeepulver gefüllt ist. Die Aufnahme ist randseitig durch eine Naht vollständig geschlossen, sodass ohne Beschädigung des Filtermaterials der Kaffee nicht nach außen gelangen kann. Nachteilig bei diesen Portionspackungen ist, dass nur eine begrenzte Auswahl von Kaffeesorten verfügbar ist. Denn hat sich der Verbraucher einmal für einen Kaffeeautomaten entschieden, kann er nur eine begrenzte Anzahl von Portionspackungen mit bereits abgefülltem Kaffee erwerben. Zudem ist der Verpackungsaufwand für jede Portionspackung erheblich, da diese für eine lange Haltbarkeit einzeln luftdicht verpackt sind. Schließlich besteht für den Verbraucher auch der Nachteil, dass das Kaffeepulver in den Portionspackungen zu sehr hohen Preisen vertrieben wird.

Aus der EP 1 221 418 ist eine Portionspackung zur Herstellung eines Brühgetränkes bekannt, die ein mit einem Aromaträger gefülltes Gehäuse aufweist, das verschlossen ist und in eine Brühkammer eingelegt werden kann. Ein Nachfüllen dieser Portionspackung und ein manuelles Verschließen ist nicht möglich.

Aus der EP 361 569 ist ein Kaffeefilter bekannt, in dem eine bestimmte Menge an gemahlenem Kaffeepulver zwischen einem inneren und einem äußeren Filterpapier eingefüllt werden kann wobei das innere und das äußere Filterpapier an einer Halterung festgelegt sind.

Die WO 03/101860 zeigt eine Vorrichtung zum Zubereiten von Kaffee mit einem Halter in dem ein oberer und ein unterer Filter aus waschbarem Material eingefügt wird. Die beiden Filter werden dabei entlang eines festen Ringes zusammengedrückt.

Es ist daher Aufgabe der vorliegenden Erfindung eine Filtereinrichtung zu schaffen, die wieder verwendet werden und eine einfache Handhabung gewährleistet. Zudem soll die Filtereinrichtung auch unter Hygienegesichtspunkten hohen Anforderungen genügen.

Diese Aufgabe wird mit einer Filtereinrichtung mit den Merkmalen des Anspruches 1 gelöst.

Erfindungsgemäß weist die Filtereinrichtung eine Aufnahmekammer auf, wobei der Boden der Aufnahmekammer durch einen schalenförmigen auswechselbaren Filterpapiereinsatz gebildet ist. Dadurch kann die Qualität des Filtems beim Brühvorgang gewährleistet werden, da das Filterpapier einen höheren Abscheidungsgrad als Siebe oder andere Filtermedien besitzt. Zudem sorgt die Auswechselbarkeit des Filterpapiereinsatzes dafür, dass das Kaffeepulver oder der Tee nach dem Brühvorgang einfach entsorgt werden kann, indem Filterpapiereinsatz und Kaffeemehl oder Tee zusammen weggeworfen werden können. Der Benutzer muss vor dem nächsten Brühvorgang dann lediglich einen neuen Filterpapiereinsatz in den Halter einlegen, was jedoch auch unter Hygienegesichtspunkten vorteilhaft ist.

Für eine einfache Handhabung ist der Filterpapiereinsatz kreisförmig ausgebildet und weist einen nach oben hervorstehenden ringförmigen Rand auf. Dadurch kann der Filterpapiereinsatz einfach in den Halter eingelegt werden und kann die gewünschte Menge an Kaffeepulver oder Tee aufnehmen.

Der Halter ist vorzugsweise ringförmig ausgebildet und weist bodenseitig ein oder mehrere Öffnungen auf, durch die dann das heiße Wasser bzw. das heiße Brühgetränk durchströmen kann. Damit der Filterpapiereinsatz sich nicht nach unten durchbiegt, weist der Halter bodenseitig Streben zur Abstützung auf. Dadurch kann der Brühvorgang auch unter einem gewissen Druck erfolgen, wobei der Filterpapiereinsatz nicht aus dem Halter herausgedrückt wird.

Gemäß der Erfindung weist der Halter auf der zum Boden gegenüberliegenden Seite einen verschließbaren Deckel auf, der beispielsweise über ein Scharniergelenk mit dem Halter verbunden sein kann. Der Deckel ist nach einer vorteilhaften Ausgestaltung mit einem Sieb versehen, das mit heißem Wasser durchströmt werden kann und an einem äußeren Ring festgelegt ist. Über den Deckel wird der Rand des Filterpapiereinsatzes festgeklemmt, wobei auch die Befestigung des Deckels innerhalb des Halters über Rastverbindungen möglich ist.

Die Erfindung wird nachfolgend anhand eines Ausführungsbeispieles mit Bezug auf die beigefügte Zeichnung erläutert. Es zeigt:

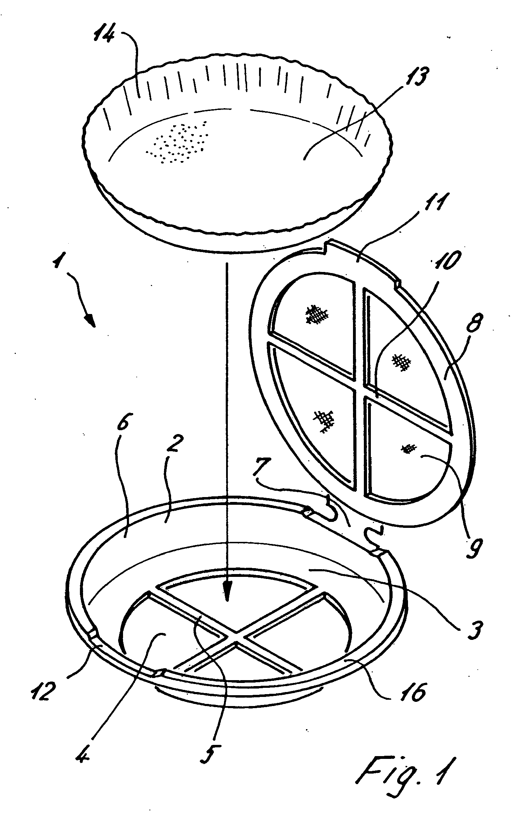

- Figur 1: eine perspektivische Ansicht einer erfindungsgemäßen Filtereinrichtung in der geöffneten Position.

Eine Filtereinrichtung 1 umfasst einen Halter 2 aus Kunststoff, der eine Aufnahmekammer ausbildet, in die Kaffeepulver, Tee oder ein anderer Stoff eingefüllt werden kann, um anschließend mit einem Fluid durchströmt zu werden.

Der Halter 2 ist ringförmig ausgebildet und umfasst einen unteren nach innen hervorstehenden Flansch 3, in dem vier Öffnungen 4 ausgespart sind, die durch Streben 5 unterteilt sind. Von dem Flansch 3 erstreckt sich eine Seitenwand 6 nach oben, die in einem radial nach außen hervorstehenden Rand 16 mündet. An dem Rand 16 ist an einer Stelle ein Scharnier 7, vorzugsweise ein Filmscharnier ausgebildet, an dem ein Deckel 8 verschwenkbar gehalten ist. Der Deckel 8 weist einen Ring auf, in dem ein Sieb 9 festgelegt ist, das durch Streben 10 abgestützt ist. Der Deckel 8 ist in dem Bereich des Siebes 9 mit Wasser durchströmbar. Das Sieb 9 kann beispielsweise aus eine perforierten Kunststofffolie, insbesondere einer Polyethylenfolie gebildet sein. An dem Deckel 8 ist ferner ein radial hervorstehender Griffabschnitt 11 vorgesehen, der in der geschlossenen Position des Halters 2 in eine Aufnahme 12 an der Seitenwand 6 des Halters 2 einfügbar ist.

An dem Halter 2 sind ferner an dem inneren Bereich der Seitenwand 6 Anschläge und Rastmittel vorgesehen, die mit dem Deckel 8 zusammenwirken, sodass der Deckel 8 in einer geschlossenen Position innerhalb der Seitenwand 6 fixierbar ist.

In den Halter 2 ist ein schalenförmiger auswechselbarer Filterpapiereinsatz 13 einfügbar, der einen kreisförmigen Boden ausbildet, von dem sich ein ringfömiger Rand 14 nach oben erstreckt. Der Rand 14 erweitert sich und der Filterpapiereinsatz 13 lässt sich im Wesentlichen formschlüssig in dem Halter 2 aufnehmen.

Zum Brühen von Kaffee oder Tee wird der Halter 2 geöffnet und der Filterpapiereinsatz 13 eingelegt. Anschließend wird Kaffee oder Tee auf den Filterpapiereinsatz 13 gegeben, wobei sowohl die Menge als auch die Sorte entsprechend den Wünschen des Benutzers ausgewählt werden kann. Anschließend wird der Deckel 8 verschlossen und die Filtereinrichtung in eine Brühkammer eines Kaffeeautomaten eingelegt. Nach dem Gebrauch kann dann der Deckel 8 geöffnet werden und der Filterpapiereinsatz 13 mit dem verbrauchten Kaffeemehl oder Tee entsorgt werden.

In dem dargestellten Ausführungsbeispiel ist der Deckel 8 mit einem Sieb 9 versehen. Es ist natürlich auch möglich, in dem Deckel 8 mehrere Öffnungen vorzusehen, die nicht mit einem Sieb verschlossen sind. Ferner kann auch im Bereich des Deckels 8 ein Filterpapiereinsatz zur Anwendung kommen, der dann zusammen mit dem Filterpapiereinsatz 13 entsorgt werden kann.

Der Filterpapiereinsatz 13 kann durch den Deckel 8 bei Bedarf klemmend festgelegt werden. Zudem ist es möglich, an dem Filterpapiereinsatz 13 ein oder mehrere Griffabschnitte hervorstehen zu lassen, um die Handhabung beim Herausnehmen des Filterpapiereinsatzes zu vereinfachen.

Bei der Filtereinrichtung kann die Geometrie der Öffnungen 4 und der Streben 5 frei gewählt werden, je nachdem wie groß der Durchmesser des Filterpapiereinsatzes 13 ist. Übliche Größen für den Halter und den Filterpapiereinsatz liegen in einem Bereich zwischen 60 und 70 mm für einzelne Brühportionen, bei mehreren Tassen auch etwas größer.

## Patentansprüche

1. Filtereinrichtung, insbesondere zum Brühen von Kaffee, mit einem Halter (2), der eine mit Kaffeepulver befüllbare und verschließbare Aufnahmekammer aufweist, die von heißem Wasser durchströmbar ist, wobei der Boden der Aufnahmekammer durch einen schalenförmigen auswechselbaren Filterpapiereinsatz (13) gebildet ist und der Halter (2) auf der zum Boden gegenüberliegenden Seite einen verschließbaren Deckel (8) aufweist, **dadurch gekennzeichnet, dass** der Deckel (8) einen Rand des Filterpapiereinsatzes festklemmt.

2. Filtereinrichtung nach Anspruch 1, **dadurch gekennzeichnet, dass** der Filterpapiereinsatz (13) kreisförmig mit einem nach oben hervorstehenden ringförmigen Rand (14) ausgebildet ist.

3. Filtereinrichtung nach Anspruch 1 oder 2, **dadurch gekennzeichnet, dass** der Halter (2) ringförmig ausgebildet ist und bodenseitig ein oder mehrere Öffnungen (4) aufweist.

4. Filtereinrichtung nach einem der Ansprüche 1 bis 3, **dadurch gekennzeichnet, dass** der Halter (2) bodenseitig Streben (5) zur Abstützung des Filterpapiereinsatzes (13) aufweist.

5. Filtereinrichtung nach einem der Ansprüche 1 bis 4, **dadurch gekennzeichnet, dass** der Deckel (8) ein Sieb (9) aufweist, das an einem äußeren Ring festgelegt ist.

6. Filtereinrichtung nach Anspruch 5, **dadurch gekennzeichnet, dass** das Sieb (9) aus einer perforierten Kunststofffolie gebildet ist.

## Claims

1. Filter device, in particular for brewing coffee, comprising a holder (2) which has an accommodation chamber which can be filled with coffee powder and can be closed and through which hot water can flow, with the base of the accommodation chamber being formed by a bowl-like replaceable filter paper insert (13) and the holder (2) having a closable cover (8) on the side opposite the base, **characterized in that** the cover (8) firmly clamps an edge of the filter paper insert.

2. Filter device according to Claim 1, **characterized in that** the filter paper insert (13) is of circular design with an annular edge (14) which projects upwards.

3. Filter device according to Claim 1 or 2, **characterized in that** the holder (2) is of annular design and has one or more openings (4) in the base.

4. Filter device according to one of Claims 1 to 3, **characterized in that** the holder (2) has struts (5) in the base for supporting the filter paper insert (13).

5. Filter device according to one of Claims 1 to 4, **characterized in that** the cover (8) has a screen (9) which is fixed to an outer ring.

6. Filter device according to Claim 5, **characterized in that** the screen (9) is formed from a perforated plastic film.

## Revendications

1. Dispositif de filtrage, en particulier pour la percolation du café, avec un support (2), qui présente une chambre de réception pouvant être remplie de poudre de café et verrouillée, qui peut être traversée par de l'eau chaude, dans lequel le fond de la chambre de réception est formé par un insert de papier filtre (13) remplaçable en forme de cuvette et le support (2) présente un couvercle (8) verrouillable sur le côté opposé au fond, **caractérisé en ce que** le couvercle (8) bloque un bord de l'insert de papier filtre.

2. Dispositif de filtrage selon la revendication 1, **caractérisé en ce que** l'insert de papier filtre (13) est réalisé de façon circulaire avec un bord annulaire (14) en saillie vers le haut.

3. Dispositif de filtrage selon la revendication 1 ou 2, **caractérisé en ce que** le support (2) est réalisé de façon annulaire et présente une ou plusieurs ouvertures (4) côté fond.

4. Dispositif selon l'une des revendications 1 à 3, **caractérisé en ce que** le support (2) présente côté fond des croisillons (5) pour supporter l'insert de papier filtre (13).

5. Dispositif de filtrage selon l'une des revendications 1 à 4, **caractérisé en ce que** le couvercle (8) présente un tamis (9) qui est fixé au niveau d'une bague extérieure.

6. Dispositif de filtrage selon la revendication 5, **caractérisé en ce que** le tamis (9) est formé d'un film plastique perforé.
